# EUROPEAN PATENT APPLICATION

(11) **EP 4 851 968 A1**
(43) Date of publication of application: **09.12.2026**
(21) Application number: 24921892.6
(22) Date of filing: 19.12.2024
(51) Int. Cl.: G08G 1/16, G01C 21/26, G08G 1/09, G08G 1/0955

(54) **ROADSIDE DEVICE, INFORMATION PROCESSING DEVICE, AND NON-TRANSITORY COMPUTER-READABLE MEDIUM**

(30) Priority: 29.01.2024 JP 2024011321
(71) Applicant: TOYOTA JIDOSHA KABUSHIKI KAISHA, Toyota-Shi, Aichi-Ken 471-8571 (JP)
(72) Inventor: KASHIWAKURA Toshiki, Toyota-shi, Aichi 471-8571 (JP); INABA Chihiro, Toyota-shi, Aichi 471-8571 (JP); SUZUKI Shoi, Toyota-shi, Aichi 471-8571 (JP); OKADA Tsuyoshi, Toyota-shi, Aichi 471-8571 (JP); KOBATAKE Yasuhiro, Toyota-shi, Aichi 471-8571 (JP)
(74) Representative: TBK
(86) International application number: PCT/JP2024/045071
(87) International publication number: WO 2025/164139

(57) **Abstract**

A roadside apparatus includes a communication interface that transmits and receives information, an imager that captures images of pedestrians, an output interface that outputs information directed to the pedestrians, and a controller that transmits, to a vehicle, first information indicating approach of the pedestrians to a roadway based on the captured images, and then outputs second information for alerting the pedestrians to the vehicle.

## Description

### CROSS-REFERENCE TO RELATED APPLICATION

This application claims priority to Japanese Patent Application No. 2024-011321, filed on January 29, 2024, the entire contents of which are incorporated herein by reference.

### TECHNICAL FIELD

The present disclosure relates to a roadside apparatus, an information processing apparatus, and a non-transitory computer readable medium.

### BACKGROUND

Technology for notifying vehicles of the presence of pedestrians near the roadway is known to support traffic safety for vehicles and pedestrians. Patent Literature (PTL) 1 discloses an apparatus that displays an image indicating, to a driver of a vehicle, the position of the vehicle and the positions of pedestrians near the vehicle.

### CITATION LIST

### Patent Literature

PTL 1: JP 2017-068335 A

### SUMMARY

### (Technical Problem)

When alert information directed to an occupant of a vehicle is provided, there is room to reduce a burden on the occupant in understanding the information.

The present disclosure relates to a roadside apparatus and the like that can alleviate a burden on an occupant of a vehicle when alert information directed to the occupant is provided.

### (Solution to Problem)

A roadside apparatus according to the present disclosure includes:
a communication interface configured to transmit and receive information;
an imager configured to capture an image of a pedestrian;
an output interface configured to output information directed to the pedestrian; and
a controller configured to transmit, to a vehicle, first information indicating the approach of the pedestrian to the roadway based on the captured image, and then output second information for alerting the pedestrian to the vehicle.

An information processing apparatus according to the present disclosure includes:
a communication interface configured to transmit and receive information; and
a controller configured to receive, from a roadside apparatus, location information indicating the position of the roadside apparatus when the roadside apparatus detects a pedestrian and pedestrian information indicating the pedestrian, and transmit the location information and the pedestrian information to a terminal apparatus, to display the location information and the pedestrian information on the terminal apparatus.

A non-transitory computer readable medium according to the present disclosure stores a program for a terminal apparatus including a communication interface and a controller, the program configured to cause the controller to execute an operation including, when location information indicating the position of a roadside apparatus when the roadside apparatus detects a pedestrian and pedestrian information indicating the pedestrian are transmitted from the roadside apparatus, receiving the location information and the pedestrian information and displaying the location information and the pedestrian information.

### (Advantageous Effect)

The roadside apparatus and the like according to the present disclosure can alleviate a burden on an occupant of a vehicle when alert information directed to the occupant is provided.

### BRIEF DESCRIPTION OF THE DRAWINGS

In the accompanying drawings:
FIG. 1 is a diagram illustrating an example of a configuration of an information provision system;
FIG. 2 is a diagram illustrating an example of a configuration of a server apparatus;
FIG. 3 is a diagram illustrating an example of a configuration of a roadside apparatus;
FIG. 4 is a diagram illustrating an example of a configuration of a terminal apparatus;
FIG. 5 is a diagram illustrating an example of an operation procedure of the information provision system;
FIG. 6 is a diagram illustrating an example of display of notification information; and
FIG. 7 is a diagram illustrating an example of an operation procedure of the information provision system according to a variation.

### DETAILED DESCRIPTION

An embodiment will be described below with reference to the drawings.

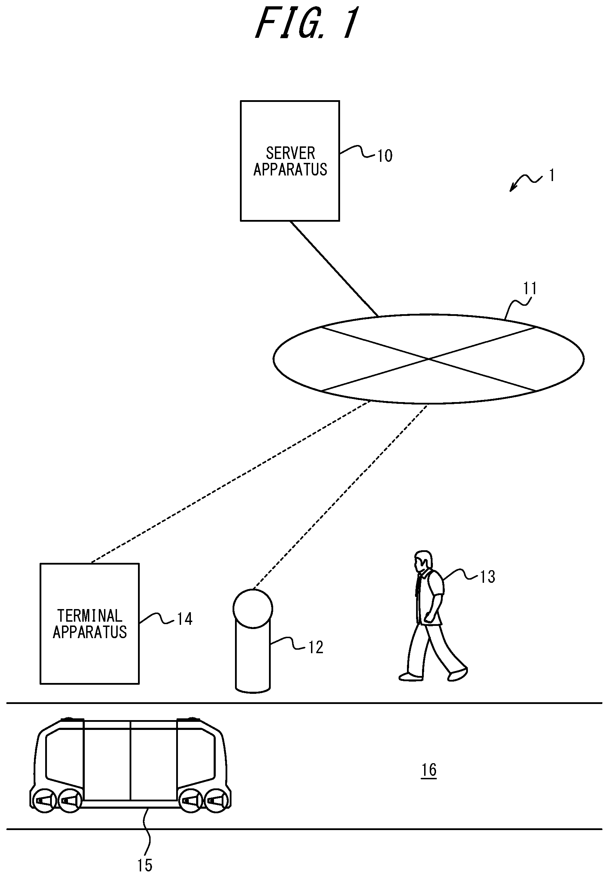

FIG. 1 is a diagram illustrating an example of a configuration of an information provision system according to the embodiment. An information provision system 1 includes at least one server apparatus 10, at least one roadside apparatus 12, and at least one terminal apparatus 14 that are communicably connected to each other via a network 11.

The server apparatus 10 is, for example, a server computer that belongs to a cloud computing system or another computing system, and functions as a server that implements various functions. The server apparatus 10 may be configured with two or more server computers that are communicably connected to each other and operate in cooperation with each other. The server apparatus 10 corresponds to "information processing apparatus" in the present embodiment.

The network 11 is the Internet, for example. The network 11 may include a mobile communication network, an ad hoc network, a local area network (LAN), a metropolitan area network (MAN), other networks, or any combination thereof.

The roadside apparatus 12 is a movable apparatus that is installed at any point along the roadway 16, such as at an end of a sidewalk bordering the roadway 16, and is configured to be operable with an internal battery, for example. The roadside apparatus 12 captures images of pedestrians 13 walking on the sidewalk, and outputs, based on the captured images, various types of information directed to the pedestrians 13 for assisting the pedestrians 13 in walking. The roadside apparatus 12 is configured to be communicable with the server apparatus 10 via the network 11.

The terminal apparatus 14 is a smartphone, a tablet terminal, or an in-vehicle apparatus that has communication and information processing functions, and is connected to the network 11 via mobile communication. The terminal apparatus 14 is used by an occupant of a vehicle 15. The terminal apparatus 14 includes an interface that accepts operations for inputting various types of information by the occupant and outputs various types of information to the occupant. The vehicle 15 is an automated driving vehicle whose driving is automated at any level (for example, any of Level 1 to Level 5 defined by the Society of Automotive Engineers (SAE)), while being appropriately assisted by the occupant. The vehicle 15 may be an electric vehicle or a hybrid vehicle that uses battery power for at least part of the energy for driving.

In the information provision system 1, the roadside apparatus 12 outputs information (hereinafter referred to as notification information) for displaying, on the terminal apparatus 14, location information indicating the position of the roadside apparatus 12 upon detection of pedestrians 13 and pedestrian information indicating the pedestrians 13. When the notification information is transmitted to the terminal apparatus 14 via the server apparatus 10, the terminal apparatus 14 presents the notification information to the occupant. The notification information is displayed as images, for example. The roadside apparatus 12 can be used as a sign indicating the boundary with the roadway 16 on a sidewalk that is temporarily determined due to an event, construction, or the like in a block, and the occupant can grasp, from the location information displayed as the image, a location at which the roadside apparatus 12 is installed. The occupant can also grasp, from the pedestrian information displayed as the image along with the location information, the presence of pedestrians detected by the roadside apparatus 12. Even when a plurality of roadside apparatuses 12 is installed in an operating range of the vehicle 15, the occupant can relatively easily grasp, using images, a relatively large amount of information such as installation locations and the presence of pedestrians, before the vehicle 15 reaches the installation location of each roadside apparatus 12. Therefore, the present embodiment can alleviate a burden on an occupant of a vehicle when alert information directed to the occupant is provided.

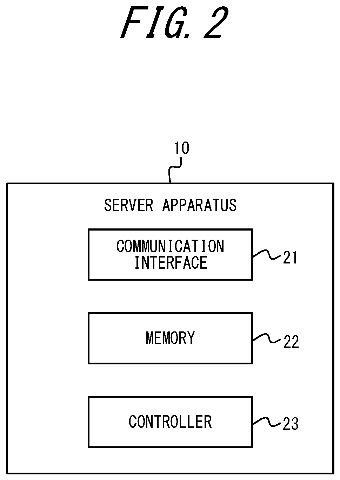

FIG. 2 is a diagram illustrating an example of a configuration of the server apparatus 10. The server apparatus 10 includes a communication interface 21, a memory 22, and a controller 23. When the server apparatus 10 is composed of two or more server computers, these components are appropriately arranged among the two or more computers.

The communication interface 21 includes one or more interfaces for communication. The interfaces for communication include, for example, a LAN interface. The communication interface 21 receives information to be used for operations of the server apparatus 10, and transmits information obtained by operations of the server apparatus 10. The server apparatus 10 is connected to the network 11 by the communication interface 21, and communicates with the roadside apparatuses 12 and the like over the network 11.

The memory 22 includes, for example, one or more semiconductor memories, one or more magnetic memories, one or more optical memories, or a combination of at least two of these types, to function as main memory, auxiliary memory, or cache memory. The semiconductor memories are, for example, random access memory (RAM) or read only memory (ROM). The RAM is, for example, static RAM (SRAM) or dynamic RAM (DRAM). The ROM is, for example, electrically erasable programmable ROM (EEPROM). The memory 22 stores the information to be used for the operations of the server apparatus 10 and the information obtained by the operations of the server apparatus 10.

The controller 23 includes one or more processors, one or more dedicated circuits, or a combination thereof. The processors are general purpose processors, such as central processing units (CPUs), or dedicated processors, such as graphics processing units (GPUs), dedicated to specific processing. The dedicated circuits are, for example, field-programmable gate arrays (FPGAs), application specific integrated circuits (ASICs), or the like. The controller 23 executes information processing related to operations of the server apparatus 10 while controlling components of the server apparatus 10. The functions of the server apparatus 10 are realized by execution of a control program by a processor included in the controller 23. The control program is a program for causing a computer to function as the server apparatus 10. Some or all of the functions of the server apparatus 10 may be realized by a dedicated circuit included in the controller 23. The control program may be stored on a non-transitory recording/storage medium readable by the server apparatus 10, and be read from the medium by the server apparatus 10.

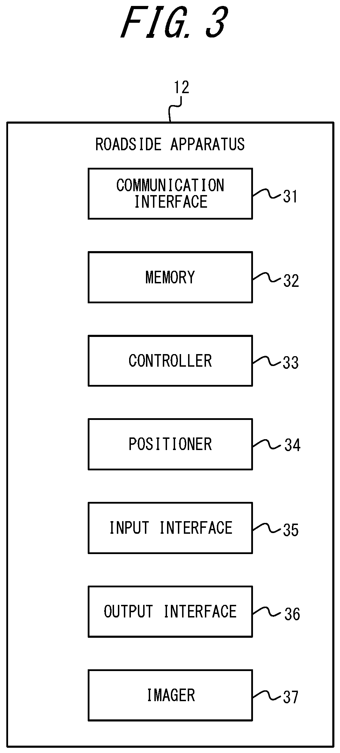

FIG. 3 is a diagram illustrating an example of a configuration of the roadside apparatus 12. The roadside apparatus 12 includes a communication interface 31, a memory 32, a controller 33, a positioner 34, an input interface 35, an output interface 36, and an imager 37.

The communication interface 31 includes a communication module compliant with a wired or wireless LAN standard, a module compliant with a mobile communication standard, or the like. The mobile communication standard includes Long Term Evolution (LTE), 4th Generation (4G), 5th Generation (5G), or the like. The roadside apparatus 12 is connected by the communication interface 31 to the network 11 via a nearby router apparatus or a mobile communication base station, and communicates with the server apparatus 10 and the like over the network 11.

The memory 32 includes, for example, one or more semiconductor memories, one or more magnetic memories, one or more optical memories, or a combination of at least two of these types. The semiconductor memories are, for example, RAM or ROM. The RAM is, for example, SRAM or DRAM. The ROM is, for example, EEPROM. The memory 32 stores information to be used for operations of the controller 33 and information obtained by operations of the controller 33.

The controller 33 has one or more general purpose processors such as CPUs or micro processing units (MPUs), or one or more dedicated processors that are dedicated to specific processing. Alternatively, the controller 33 may have one or more dedicated circuits such as FPGAs or ASICs. The controller 33 performs overall control of operations of the roadside apparatus 12 by operating according to control/processing programs or operating according to operation procedures implemented as circuits. The controller 33 then transmits and receives various types of information to and from the server apparatus 10 and the like via the communication interface 31, and executes operations according to the present embodiment. The functions of the controller 33 are realized by execution of a control program by a processor included in the controller 33. The control program is a program for causing the processor to function as the controller 33. Some or all of the functions of the controller 33 may be realized by a dedicated circuit included in the controller 33.

The positioner 34 includes one or more Global Navigation Satellite System (GNSS) receivers. The GNSS includes, for example, global positioning system (GPS), quasi-zenith satellite system (QZSS), BeiDou, global navigation satellite system (GLONASS), and/or Galileo. The positioner 34 acquires position information on the roadside apparatus 12, and transmits the position information to the controller 33.

The input interface 35 includes one or more interfaces for input. The interfaces for input may include, for example, physical keys, capacitive keys, a pointing device, and/or a touch screen integrally provided with a display. The input interface 35 accepts inputs of information to be used in operations of the controller 33, and transmits the input information to the controller 43.

The output interface 36 includes one or more interfaces for output. The interfaces for output include, for example, a display or a speaker. The display is illumination or a message board using light emitting diode (LED) lights, for example. The output interface 36 outputs information under the control of the controller 33.

The imager 37 is a visible light camera installed at a position from which the external surroundings of the roadside apparatus 12 can be imaged. The camera images subjects at, for example, 15 to 30 frames per second to generate a series of captured images. The imager 18 transmits the captured images to the controller 23. In the present embodiment, the imager 37 corresponds to "detector."

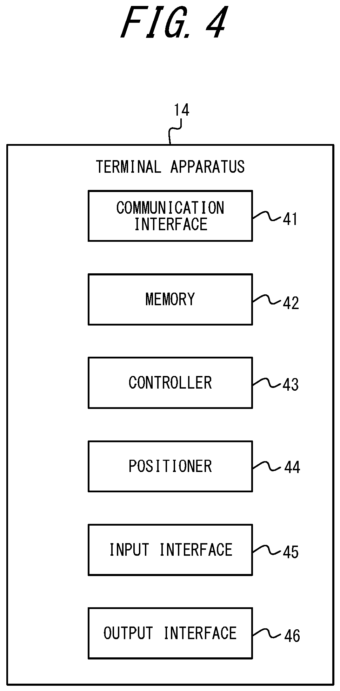

FIG. 4 is a diagram illustrating an example of a configuration of the terminal apparatus 14. The terminal apparatus 14 includes a communication interface 41, a memory 42, a controller 43, a positioner 44, an input interface 45, and an output interface 46.

The communication interface 41 includes a communication module compliant with a wired or wireless LAN standard, a module compliant with a mobile communication standard such as LTE, 4G, or 5G, or the like. The terminal apparatus 14 is connected by the communication interface 41 to the network 11 via a nearby router apparatus or a mobile communication base station, and communicates with other apparatuses over the network 11.

The memory 42 includes, for example, one or more semiconductor memories, one or more magnetic memories, one or more optical memories, or a combination of at least two of these types. The semiconductor memories are, for example, RAM or ROM. The RAM is, for example, SRAM or DRAM. The ROM is, for example, EEPROM. The memory 42 functions as, for example, a main memory, an auxiliary memory, or a cache memory. The memory 42 stores information to be used for operations of the controller 43 and information obtained by operations of the controller 43.

The controller 43 includes, for example, one or more general purpose processors, such as CPUs or MPUs, or one or more dedicated processors dedicated to specific processing. Alternatively, the controller 43 may have one or more dedicated circuits such as FPGAs or ASICs. The controller 43 performs overall control of operations of the terminal apparatus 14 by operating according to control/processing programs or operating according to operating procedures implemented as circuits. The controller 43 then transmits and receives various types of information to and from the server apparatus 10 and the like via the communication interface 41, and executes operations according to the present embodiment.

The positioner 44 includes one or more GNSS receivers. GNSS includes, for example, GPS, QZSS, BeiDou, GLONASS, and/or Galileo. The positioner 44 acquires position information on the terminal apparatus 14, and transmits the position information to the controller 43.

The input interface 45 includes one or more interfaces for input. The interfaces for input include, for example, physical keys, capacitive keys, a pointing device, a touch screen integrally provided with a display, a camera that captures captured images or image codes, or an IC card reader. The interfaces for input may also include a microphone that accepts audio input. The input interface 45 accepts inputs of information to be used in operations of the controller 43, and transmits the input information to the controller 43.

The output interface 46 includes one or more interfaces for output. The interfaces for output include, for example, a display or a speaker. The display is, for example, an LCD or an organic EL display. The output interface 46 outputs information obtained by operations of the controller 43.

The functions of the controller 43 are realized by execution of a control program by a processor included in the controller 43. The control program is a program for causing the processor to function as the controller 43. Some or all of the functions of the controller 43 may be realized by a dedicated circuit included in the controller 43.

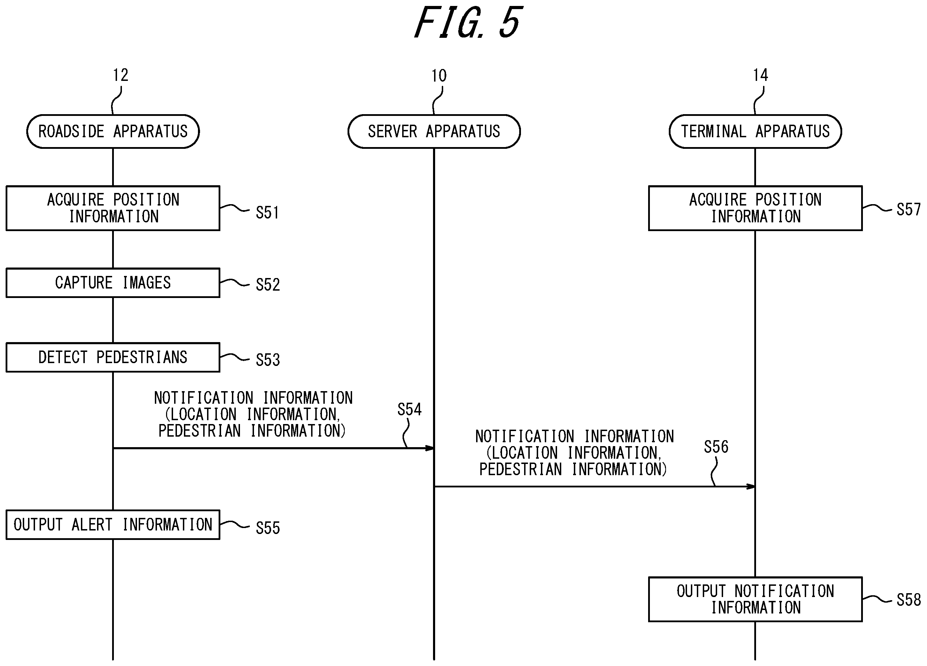

FIG. 5 is a diagram illustrating an operation procedure of the information provision system 1, and is a sequence diagram illustrating an example of a cooperative operation procedure of the server apparatus 10, the roadside apparatus 12, and the terminal apparatus 14. The steps for various information processing performed by the server apparatus 10, the roadside apparatus 12, and the terminal apparatus 14 in FIG. 5 are performed by the respective controllers 23, 33, and 43 thereof. The steps for transmitting and receiving various types of information to and from the server apparatus 10, the roadside apparatus 12, and the terminal apparatus 14 are performed by the respective controllers 23, 33, and 43 transmitting and receiving information to and from each other via the respective communication interfaces 21, 31, and 41. In the server apparatus 10, the roadside apparatus 12, and the terminal apparatus 14, the respective controllers 23, 33, and 43 appropriately store processed, transmitted, and received information in the respective memories 22, 32, and 42.

In step S51, the roadside apparatus 12 acquires position information. The controller 33 of the roadside apparatus 12 acquires, using the positioner 34, the position information on a location at which the roadside apparatus 12 is installed. The roadside apparatus 12 is configured to be movable and can be installed at any position according to a purpose. Step S51 is performed at least once after the roadside apparatus 12 is installed at any location. Step S51 may be performed, for example, at any intervals such as every few hours.

In step S52, the roadside apparatus 12 captures images of its surroundings. The imager 37 of the roadside apparatus 12 captures visible light images of the surroundings of the roadside apparatus 12, including a sidewalk, at a frame rate set freely, and transmits the captured images to the controller 33.

In step S53, the roadside apparatus 12 detects pedestrians. The controller 33 performs any image processing such as pattern recognition on the captured images of the sidewalk to detect images indicating persons, thereby detecting pedestrians 13. The controller 33 detects the number, positions, and states of the pedestrians 13. As the state of a pedestrian 13, for example, the movement of the pedestrian 13 is detected from temporal changes in the captured images.

In step S54, the roadside apparatus 12 transmits notification information to the server apparatus 10. The notification information includes location information and pedestrian information. The location information indicates the position of the roadside apparatus 12, that is, the installation location of the roadside apparatus 12 upon detection of the pedestrians 13. The pedestrian information is information indicating the pedestrians 13, including the number and states of the pedestrians 13. The states of the pedestrians 13 indicate whether the pedestrians are stationary or moving. The states of the pedestrians 13 are determined by the controller 33, for example, based on temporal changes in the captured images of the pedestrians 13, such that a pedestrian is determined to be stationary when a displacement in the images of the pedestrian is less than any reference, and the pedestrian is determined to be moving when the displacement is equal to or greater than the reference. Alternatively, the pedestrian information may include one or more captured images including the pedestrians 13. The server apparatus 10 receives the information transmitted from the roadside apparatus 12.

In step S55, the roadside apparatus 12 outputs alert information. The alert information is information conveyed by means of blinking LED lights, audio, or the like. The audio may be, for example, voice to raise awareness, such as "Please be careful of vehicles" or "Be careful when crossing." The output of the alert information alerts the pedestrians 13 crossing the roadway 16.

In step S56, the server apparatus 10 transmits the notification information received from the roadside apparatus 12 to the terminal apparatus 14. Upon receiving multiple pieces of notification information from multiple roadside apparatuses 12, the server apparatus 10 transmits the multiple pieces of notification information to the terminal apparatus 14. The terminal apparatus 14 receives the information transmitted from the server apparatus 10.

In step S57, the terminal apparatus 14 acquires position information. The controller 43 of the terminal apparatus 14 acquires the current position information using the positioner 44. Step S57 is executed in any appropriate cycles, for example, every several tens of microseconds to several seconds.

In step S58, the terminal apparatus 14 outputs the notification information transmitted from the server apparatus 10. The controller 43 displays the notification information as images via the output interface 46.

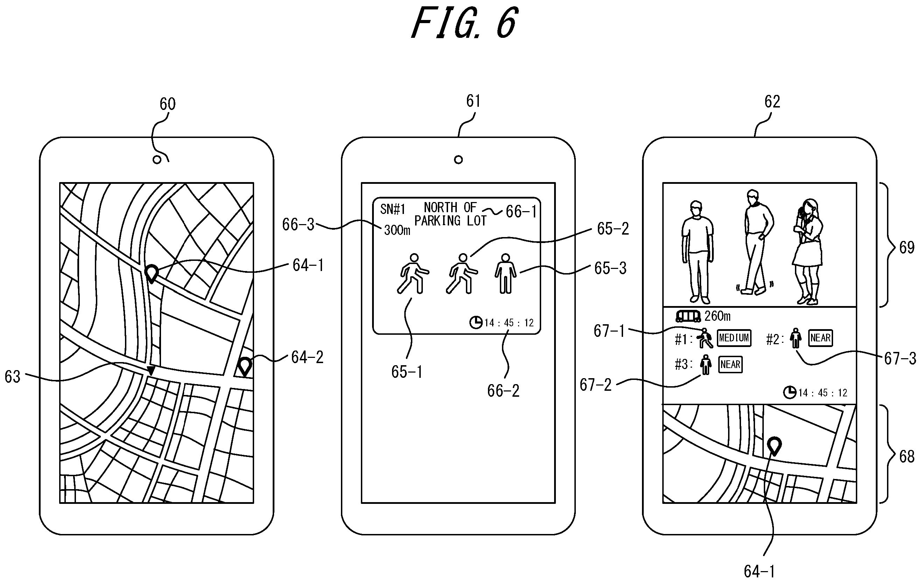

FIG. 6 is a diagram illustrating an example of display of the notification information. FIG. 6 illustrates an example of the transition of screens 60 to 62 displayed by the output interface 46 of the terminal apparatus 14.

The screen 60 displays an image in which an object 63 indicating the current position of the terminal apparatus 14, that is, the vehicle 15, and objects 64-1 and 64-2 indicating the positions of multiple roadside apparatuses 12 are overlaid on a map. The controller 43 derives the position of the object 63 on the map using the acquired position information on the terminal apparatus 14, and overlays the object 63 on the map. The controller 43 also derives the positions of the objects 64-1 and 64-2 on the map using the location information included in the notification information, and overlays the objects 64-1 and 64-2 on the map. Displaying such a screen 60 allows the occupant of the vehicle 15 to visually grasp the position of the own vehicle and the installation points of the roadside apparatuses 12 in the vicinity.

The screen 61 displays an image representing pedestrians 13 at the installation point of one of the roadside apparatuses 12. For example, when the occupant performs, on the screen 60, an operation, such as tapping operation, to select either of the objects 64-1 and 64-2 indicating the positions of the roadside apparatuses 12, the controller 43 transitions the screen 60 to a screen 61 and displays objects 65-1, 65-2, and 65-3 indicating the presence, number, and states of pedestrians 13 at the installation point of the selected roadside apparatus 12. Here, the objects 65-1, 65-2, and 65-3 respectively representing three pedestrians 13 are displayed. The objects 65-1 and 65-2 represent that the corresponding pedestrians 13 are moving, in a different manner from the object 65-3 that indicates that the corresponding pedestrian 13 is stationary. Furthermore, the screen 61 may include information such as the name 66-1 of the installation point of the selected roadside apparatus 12, a time stamp 66-2 upon detection of the pedestrians 13, and a distance 66-3 from the vehicle. The name of the installation point of the roadside apparatus 12 and the distance from the vehicle are derived from map information, for example. The time stamp is attached, for example, from the roadside apparatus 12 to the pedestrian information, and transmitted. Displaying such a screen 60 allows the occupant of the vehicle 15 to visually grasp the presence of the pedestrians 13 near the installation point of the selected roadside apparatus 12 in advance before reaching that installation point.

The screen 62 displays another image representing pedestrians 13 at the installation point of one of the roadside apparatuses 12. For example, when the occupant performs, on the screen 60, an operation to select either of the objects 64-1 and 64-2 indicating the positions of the roadside apparatuses 12, the controller 43 transitions the screen 60 to the screen 62 and displays objects 67-1, 67-2, and 67-3 indicating the presence, number, and states of pedestrians 13 at the installation point of the selected roadside apparatus 12. Here, an example in which text information, such as "medium" and "near" indicating the distances from the roadside apparatus 12 to the pedestrians 13 corresponding to the respective objects 67-1 to 67-3, is added is provided. The distances from the roadside apparatus 12 to the pedestrians 13 can be derived by the controller 33 of the roadside apparatus 12 from the captured images using any algorithm. The screen 62 may also display a map 68 on which an object 64-1 indicating the installation location of the selected roadside apparatus 12 is overlaid, and a captured image 69 in a still or video image format captured by the roadside apparatus 12. Displaying such a screen 62 allows the occupant of the vehicle 15 to visually grasp the presence of the pedestrians 13 near the installation point of the selected roadside apparatus 12 in advance and in detail, before reaching that installation point.

As described above, according to the present embodiment, the terminal apparatus 14 displays the notification information, as images, directed to the occupant of the vehicle 15, so a burden on the occupant can be reduced when alert information directed to the occupant is provided.

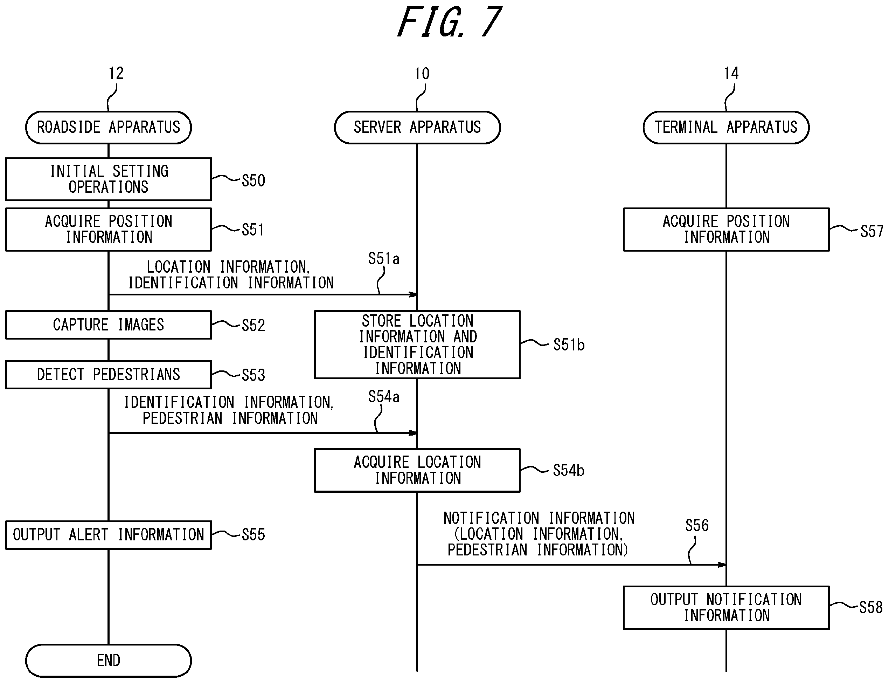

FIG. 7 is a diagram illustrating a variation of the procedure illustrated in FIG. 5. FIG. 7 differs from FIG. 5 in that steps S50, S51a, S51b, and S54b are inserted and step S54 in FIG. 5 is replaced with step S54a. The differences from FIG. 5 will be hereinafter described, and the same steps as in FIG. 5 will be omitted as appropriate.

In the variation, when the roadside apparatus 12 is installed at any location, in step S50, the roadside apparatus 12 accepts initial setting operations from an operator. In response to the initial setting operations, the roadside apparatus 12 acquires position information in step S51. Then, in step S51a, the roadside apparatus 12 transmits, to the server apparatus 10, identification information for each roadside apparatus 12 along with location information. The identification information is stored in the memory 32 in advance. Then, in step S51b, the server apparatus 10 stores, in the memory 22, the location information and the identification information in association with each other. Upon detecting pedestrians 13 in step S53, the roadside apparatus 12 transmits pedestrian information to the server apparatus 10 in step S54a, along with the identification information on the roadside apparatus 12. Then, in step S54b, the server apparatus 10 reads, acquires, and stores, from the memory 22, the location information stored in association with the identification information. This allows the server apparatus 10 to transmit, in step S56, notification information including the location information and the pedestrian information on the roadside apparatus 12 to the terminal apparatus 14. According to such a variation, the terminal apparatus 14 displays the notification information, as images, directed to the occupant of the vehicle 15, so a burden on the occupant can be reduced when alert information directed to the occupant is provided.

In another variation, whenever the terminal apparatus 14 acquires position information, the terminal apparatus 14 may transmit the position information to the server apparatus 10. The server apparatus 10 may generate a map image on which location information on the roadside apparatus 12 and the position information on the terminal apparatus 14 are overlaid, and transmit the map image to the terminal apparatus 14 along with notification information.

In the above explanation, the imager 37 of the roadside apparatus 12 corresponds to "detection means," but the "detection means" may be any means capable of detecting the number and positions of pedestrians 13, such as an infrared sensor or an ultrasonic sensor.

While the embodiment has been described with reference to the drawings and examples, it should be noted that various modifications and revisions may be implemented by those skilled in the art based on the present disclosure. Accordingly, such modifications and revisions are included within the scope of the present disclosure. For example, functions or the like included in each means, each step, or the like can be rearranged without logical inconsistency, and a plurality of means, steps, or the like can be combined into one or divided.

Examples of some embodiments of the present disclosure are described below. However, it should be noted that the embodiments of the present disclosure are not limited to these examples.
[Appendix 1] A roadside apparatus comprising:
   a communication interface configured to transmit and receive information;
   a positioner configured to detect a position of the roadside apparatus;
   a detector configured to detect a pedestrian around the roadside apparatus; and
   a controller configured to output information for displaying, on a terminal apparatus, location information indicating the position of the roadside apparatus upon detection of the pedestrian and pedestrian information indicating the pedestrian.
[Appendix 2] The roadside apparatus according to appendix 1, wherein the pedestrian information indicates movement of the pedestrian.
[Appendix 3] The roadside apparatus according to appendix 1 or 2, wherein the pedestrian information indicates number of pedestrians.
[Appendix 4] The roadside apparatus according to any one of appendices 1 to 3, wherein the location information and/or the pedestrian information are/is output as an image.
[Appendix 5] The roadside apparatus according to any one of appendices 1 to 4, wherein the controller is configured to output the location information whenever a pedestrian is newly detected.
[Appendix 6] The roadside apparatus according to any one of appendices 1 to 5, wherein the controller is configured to output the location information when the position changes.
[Appendix 7] The roadside apparatus according to any one of appendices 1 to 6 configured to be movable.
[Appendix 8] An information processing apparatus comprising:
   a communication interface configured to transmit and receive information; and
   a controller configured to receive, from a roadside apparatus, location information indicating a position of the roadside apparatus when the roadside apparatus detects a pedestrian and pedestrian information indicating the pedestrian, and transmit the location information and the pedestrian information to a terminal apparatus, to display the location information and the pedestrian information on the terminal apparatus.
[Appendix 9] The information processing apparatus according to appendix 8, wherein the pedestrian information indicates movement of the pedestrian.
[Appendix 10] The information processing apparatus according to appendix 8 or 9, wherein the pedestrian information indicates number of pedestrians.
[Appendix 11] The information processing apparatus according to any one of appendices 8 to 10, wherein the location information and/or the pedestrian information are/is output as an image.
[Appendix 12] The information processing apparatus according to any one of appendices 8 to 11, wherein the controller is configured to receive the location information from the roadside apparatus whenever the roadside apparatus newly detects a pedestrian.
[Appendix 13] The information processing apparatus according to any one of appendices 8 to 12, wherein the controller is configured to receive the location information from the roadside apparatus when the position of the roadside apparatus changes.
[Appendix 14] The information processing apparatus according to any one of appendices 8 to 13, wherein the controller is configured to transmit, to the terminal apparatus, the location information and the pedestrian information that is transmitted from the roadside apparatus whenever the roadside apparatus newly detects a pedestrian.
[Appendix 15] A non-transitory computer readable medium storing a program for a terminal apparatus comprising a communication interface and a controller, the program configured to cause the controller to execute an operation comprising, when location information indicating a position of a roadside apparatus when the roadside apparatus detects a pedestrian and pedestrian information indicating the pedestrian are transmitted from the roadside apparatus, receiving the location information and the pedestrian information and displaying the location information and the pedestrian information.
[Appendix 16] The non-transitory computer readable medium storing the program for the terminal apparatus according to appendix 15, wherein the pedestrian information indicates movement of the pedestrian.
[Appendix 17] The non-transitory computer readable medium storing the program for the terminal apparatus according to appendix 15 or 16, wherein the pedestrian information indicates number of pedestrians.
[Appendix 18] The non-transitory computer readable medium storing the program for the terminal apparatus according to any one of appendices 15 to 17, wherein the receiving and displaying of the location information and the pedestrian information includes outputting, by the controller, the location information and/or the pedestrian information as an image.
[Appendix 19] The non-transitory computer readable medium storing the program for the terminal apparatus according to any one of appendices 15 to 18, wherein the receiving and displaying of the location information and the pedestrian information includes receiving, by the controller, the location information that is transmitted from the roadside apparatus whenever the roadside apparatus newly detects a pedestrian.
[Appendix 20] The non-transitory computer readable medium storing the program for the terminal apparatus according to any one of claims 15 to 19, wherein the receiving and displaying of the location information and the pedestrian information includes receiving, by the controller, the location information that is transmitted from the roadside apparatus when the position of the roadside apparatus changes.

### REFERENCE SIGNS LIST

- 1: information provision system
- 10: server apparatus
- 11: network
- 12: roadside apparatus
- 13: pedestrian
- 14: pedestrian
- 15: vehicle
- 16: roadway
- 21, 31, 41: communication interface
- 22, 32, 42: memory
- 23, 33, 43: controller
- 34, 44: positioner
- 35, 45: input interface
- 36, 46: output interface
- 37: imager

## Claims

1. A roadside apparatus comprising:
a communication interface configured to transmit and receive information;
a positioner configured to detect a position of the roadside apparatus;
a detector configured to detect a pedestrian around the roadside apparatus; and
a controller configured to output information for displaying, on a terminal apparatus, location information indicating the position of the roadside apparatus upon detection of the pedestrian and pedestrian information indicating the pedestrian.

2. The roadside apparatus according to claim 1, wherein the pedestrian information indicates movement of the pedestrian.

3. The roadside apparatus according to claim 1, wherein the pedestrian information indicates number of pedestrians.

4. The roadside apparatus according to claim 1, wherein the location information and/or the pedestrian information are/is output as an image.

5. The roadside apparatus according to claim 1, wherein the controller is configured to output the location information whenever a pedestrian is newly detected.

6. The roadside apparatus according to claim 1, wherein the controller is configured to output the location information when the position changes.

7. The roadside apparatus according to claim 1 configured to be movable.

8. An information processing apparatus comprising:
a communication interface configured to transmit and receive information; and
a controller configured to receive, from a roadside apparatus, location information indicating a position of the roadside apparatus when the roadside apparatus detects a pedestrian and pedestrian information indicating the pedestrian, and transmit the location information and the pedestrian information to a terminal apparatus, to display the location information and the pedestrian information on the terminal apparatus.

9. The information processing apparatus according to claim 8, wherein the pedestrian information indicates movement of the pedestrian.

10. The information processing apparatus according to claim 8, wherein the pedestrian information indicates number of pedestrians.

11. The information processing apparatus according to claim 8, wherein the location information and/or the pedestrian information are/is output as an image.

12. The information processing apparatus according to claim 8, wherein the controller is configured to receive the location information from the roadside apparatus whenever the roadside apparatus newly detects a pedestrian.

13. The information processing apparatus according to claim 8, wherein the controller is configured to receive the location information from the roadside apparatus when the position of the roadside apparatus changes.

14. The information processing apparatus according to claim 13, wherein the controller is configured to transmit, to the terminal apparatus, the location information and the pedestrian information that is transmitted from the roadside apparatus whenever the roadside apparatus newly detects a pedestrian.

15. A non-transitory computer readable medium storing a program for a terminal apparatus comprising a communication interface and a controller, the program configured to cause the controller to execute an operation comprising, when location information indicating a position of a roadside apparatus when the roadside apparatus detects a pedestrian and pedestrian information indicating the pedestrian are transmitted from the roadside apparatus, receiving the location information and the pedestrian information and displaying the location information and the pedestrian information.

16. The non-transitory computer readable medium storing the program for the terminal apparatus according to claim 15, wherein the pedestrian information indicates movement of the pedestrian.

17. The non-transitory computer readable medium storing the program for the terminal apparatus according to claim 15, wherein the pedestrian information indicates number of pedestrians.

18. The non-transitory computer readable medium storing the program for the terminal apparatus according to claim 15, wherein the receiving and displaying of the location information and the pedestrian information includes outputting, by the controller, the location information and/or the pedestrian information as an image.

19. The non-transitory computer readable medium storing the program for the terminal apparatus according to claim 15, wherein the receiving and displaying of the location information and the pedestrian information includes receiving, by the controller, the location information that is transmitted from the roadside apparatus whenever the roadside apparatus newly detects a pedestrian.

20. The non-transitory computer readable medium storing the program for the terminal apparatus according to claim 15, wherein the receiving and displaying of the location information and the pedestrian information includes receiving, by the controller, the location information that is transmitted from the roadside apparatus when the position of the roadside apparatus changes.
